# EUROPÄISCHE PATENTSCHRIFT

(11) **EP 0 282 699 B1**
(45) Veröffentlichungstag und Bekanntmachung des Hinweises auf die Patenterteilung: **17.03.1993**
(21) Anmeldenummer: 88100898.1
(22) Anmeldetag: 22.01.1988
(51) Int. Cl.: C01C 1/04

(54) **Zweistufiger Ammoniakkonverter mit wenigstens einem Katalysatorbett mit in dessen Inneren angeordneten Wärmetauscher**
Two-step ammonia converter containing at least one catalyst bed internally supplied with a heat exchanger
Convertisseur d'ammoniac à deux étapes avec au moins un lit catalytique pourvu à l'intérieur d'un échangeur de chaleur

(30) Priorität: 18.03.1987 DE 3708781
(43) Veröffentlichungstag der Anmeldung: 21.09.1988
(73) Patentinhaber: Uhde GmbH, 44141 Dortmund (DE)
(72) Erfinder: Marsch, Hans-Dieter, Dipl.-Ing., D-4600 Dortmund 76 (DE); Mundo, Klaus-Jürgen, Dipl.-Ing., D-4600 Dortmund 50 (DE)
(74) Vertreter: Patentanwälte Meinke, Dabringhaus und Partner

(56) Entgegenhaltungen:
- EP-A- 0 134 260
- DE-A- 3 146 778

## Beschreibung

Die Erfindung richtet sich auf einen zweistufigen Ammoniakkonverter mit wenigstens einem ringförmig im Druckgehäuse angeordneten Katalysatorbett und einem dazu zentrisch im Inneren angeordneten, von Reaktionsgas durchströmbaren Wärmetauscher.

Zweistufige Ammoniakkonverter sind in unterschiedlichen Konstruktionen bekannt. So zeigt sowohl die Lösung nach der DE-A-27 10 247 einen derartigen Konverter in unterschiedlichen Bauweisen als auch die DE-A-31 46 778. Den bekannten Lösungen ist gemeinsam, daß in einem konzentrischen Rohr im Wärmetauscher das Gas in das Innere eingeleitet wird und dann über entsprechende Rückströmrohre zur Vorwärmung vor das erste Katalysatorbett geleitet wird, um dann dieses zu durchströmen und die Reaktionswärme dann nachfolgend im Wärmetauscher wenigstens teilweise abzugeben.

Es hat sich gezeigt, daß je nach Konstruktion und Gasführung das querschnittlich sehr große zentrische Rohr nicht zu optimalen Ergebnissen führt.

Aufgabe der Erfindung ist daher die Schaffung einer Lösung, mit der gerade die Führung der Wärmetauscherrohre, Optimierung und auch ein günstiger Wärmeübergang erreichbar ist, wobei insbesondere eine konstruktiv einfache Lösung gefunden werden soll.

Bei einem zweistufigen Ammoniakkonverter der eingangs bezeichneten Art wird diese Aufgabe gemäß der Erfindung durch die kennzeichnenden Merkmale des Anspruches 1 gelöst.

Grundsätzlich sind U-förmige Wärmetauscherrohre bekannt. Bei den hier im Vordergrund stehenden zweistufigen Ammoniakkonvertern in Radialbauweise haben sie den Vorteil, daß bereits die inneren, das Gas nach unten leitenden Wärmetauscherrohre zum Wärmetausch herangezogen werden können. Die sogenannte Einbodenbauweise macht auch in der Regel eine sehr einfache Konstruktion möglich, da der gesamte Wärmetauscher z.B. von oben in den Reaktor eingesetzt und montiert werden kann. Er kann jederzeit ggf. zu Revisionen ausgewechselt oder ausgebaut werden, ohne daß dies auf besondere Schwierigkeiten stieße. Weiterhin muß die Länge des Wärmeaustauschers nicht auf die Länge des Katalysatorbettes abgestimmt sein, d.h. er kann auch kürzer ausgeführt werden.

Vorteilhaft ist es dabei, daß der Wärmetauscherboden in Schwerkraftsrichtung an der oberen Seite des Wärmetauschers angeordnet ist und mit einer zentrischen Frischgaszufuhr- und -verteilerglocke ausgerüstet ist und daß um die U-förmigen Rohre Schikanen zur Strömungsleitung des wärmetauschenden, das erste Katalysatorbett verlassenden Gases, wie an sich bekannt, vorgesehen sind.

Von Vorteil ist es auch, wenn wenigstens eine mit ihrer Austrittsöffnung veränderbare Zuführleitung für Quenchgas innerhalb der Rohrbündel des Wärmetauschers vorgesehen ist. Damit läßt sich sowohl das Anfahren der Reaktion vereinfachen als auch eine gewisse Steuerungsfunktion ausüben.

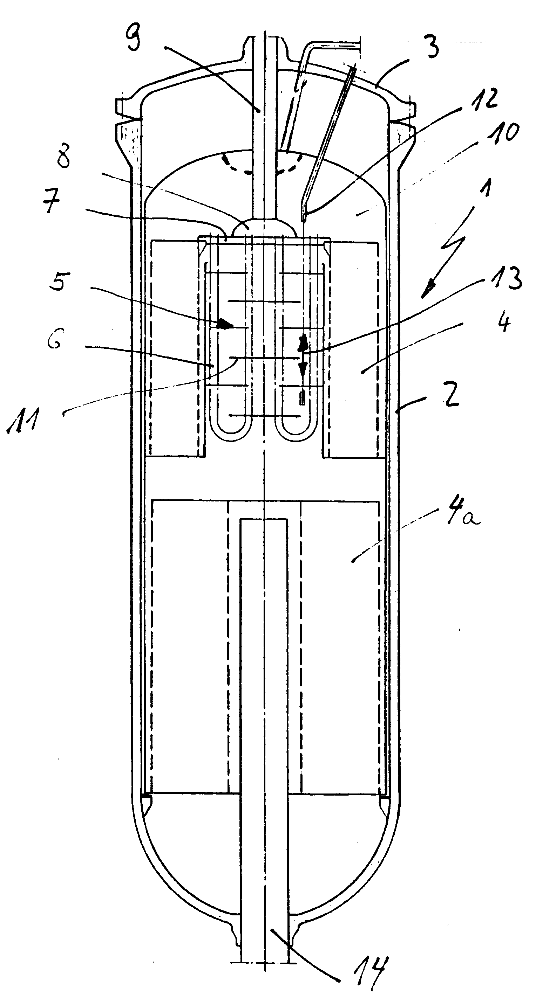

Die Erfindung ist nachstehend anhand der Zeichnung beispielsweise näher erläutert. Diese zeigt in der einzigen Figur einen Querschnitt durch einen vereinfacht wiedergegebenen zweistufigen Ammoniakkonverter nach der Erfindung.

Der allgemein mit 1 bezeichnete Konverter weist ein Druckgehäuse 2 mit Deckel 3 auf, wobei im Inneren des Druckbehälters zwei Katalysatorbetten 4 und 4a vorgesehen sind, auf deren speziellen Aufbau und deren spezielle konstruktive Gestaltung es hier nicht ankommt.

Das zylindrische, hier im wesentlichen interessierende erste Katalysatorbett 4 weist in seinem Inneren einen Einboden-Wärmetauscher 5 auf, dessen Wärmetauscherrohre 6 U-förmig von innen nach außen gebogen und in einem gemeinsamen Rohrboden 7 angeordnet sind.

Die innenliegenden Teilrohre der U-bogenförmigen Wärmetauscherrohre 6 stehen mit einer Verteilerglocke 8 in Verbindung zu dem der Zustrom 9 für das Synthesegas führt. Die ableitenden Rohrschenkel münden in einem Gasdom 10, von dem aus das erste Katalysatorbett 4 zur radialen Durchströmung beaufschlagt wird.

Im Inneren des Wärmetauschers 5 sind Schickanen 11 angeordnet, um eine optimale Durchströmung zu gewährleisten. Auch ist eine Quenchgaszuführleitung 12 vorgesehen, deren Eintauchtiefe veränderbar ist, was mit dem Doppelpfeil 13 angedeutet sein soll. Nach radialer Durchströmung des zweiten Katalysatorbettes 4 gelangt das Prozeßgas zum Auslaßstutzen 14.

## Patentansprüche

1. Zweistufigen Ammoniakkonverter mit wenigstens einem ringförmigen, im Druckgehäuse angeordneten Katalysatorbett (4) und einem dazu zentrisch im Inneren angeordneten, vom Reaktionsgas durchströmbaren Wärmetauscher,
dadurch gekennzeichnet,
daß der Wärmetauscher (5) als ein Einboden-Wärmetauscher mit U-förmig in einem Wärmetauscherboden (7) angeordneten Wärmetauscherrohren (6) ausgebildet ist, wobei die Rohrschenkel der U-Rohre für den Eintritt mittig und dem Austritt in der Peripherie angeordnet sind, daß der Wärmetauscherboden (7) in Schwerkraftrichtung an der oberen Seite des Wärmetauschers (5) angeordnet und mit einer zentrischen Frischgaszufuhr- und Verteilerglocke (8) ausgerüstet ist, wobei ein zentraler, unberohrter Gasführungsraum den Wärmetauscher (5) durchsetzt und daß um die U-förmigen Wärmetauscherrohre (6) Schickanen (11) zur Strömungsumleitung des wärmetauschenden, das erste Katalysatorbett (3) verlassenden Gases, derart angeordnet sind, daß eine Vermischung im zentralen Gasführungsraum erfolgt.

2. Zweistufiger Ammoniakkonverter nach Anspruch 1,
dadurch gekennzeichnet,
daß wenigstens eine mit ihrer wirksamen Austrittsöffnung veränderbare Zuführleitung (12) für Quenchgas innerhalb des Rohrbündels (6) des Wärmetauschers (5) vorgesehen ist.

## Claims

1. A two-stage ammonia converter with at least one annular catalyst bed (4) disposed in the pressure casing, and a heat exchanger which is arranged In central relationship therewith in its interior and through which can flow the reaction gas, characterised in that the heat exchanger (5) is in the form of a single-plate heat exchanger with heat exchanger tubes (6) which are arranged in a U-shape in a heat exchanger plate (7), wherein the legs of the U-tubes are arranged centrally for the intake and at the periphery for the discharge, that the heat exchanger plate (7) is arranged at the upper side of the heat exchanger (5), in the direction of the force of gravity, and is provided with a central fresh gas feed and distributor bell (8) wherein a central gas guide space, without tube, passes through the heat exchanger (5), and that baffle means (11) for diverting the flow of the heat-exchanging gas leaving the first catalyst bed (3) are arranged around the U-shaped heat exchanger tubes (6) in such a way that mixing occurs in the central gas guide space.

2. A two-stage ammonia converter according to claim 1 characterised in that at least one feed conduit (12) for quench gas, which is variable with its effective discharge opening, is provided within the tube nest (6) of the heat exchanger (5).

## Revendications

1. Convertisseur d'ammoniac à deux étages avec au moins un lit de catalyseur (4) agencé de façon circulaire dans un logement ou récipient sous pression et un échangeur de chaleur pouvant être balayé par le gaz réactionnel, échangeur de chaleur agencé centriquement à l'intérieur du logement sous pression,
caractérisé en ce que
l'échangeur de chaleur (5) est conçu sous forme d'échangeur de chaleur à un seul fond avec des tubes d'échange thermique (6) agencés en forme de U dans un fond d'échangeur thermique (7), l'embranchement tubulaire des tubes en forme de U pour l'entrée étant monté centralement et la sortie dans la périphérie de telle sorte que le fond d'échangeur thermique (7) est monté dans la direction de la pesanteur sur le côté supérieur de l'échangeur thermique (5) et avec une cloche de distribution et d'amenée des gaz frais (8) centrale, une zone centrale non perforée de guidage de gaz traversant l'échangeur de chaleur (5), et en ce que les chicanes ou déflecteurs (11) entourant les tubes en forme de U de l'échangeur de chaleur (6) sont agencés de telle manière en direction de la dérivation du gaz d'échange thermique quittant le premier lit de catalyseur (3) à obtenir un mélange dans la zone centrale de guidage des gaz.

2. Convertisseur d'ammoniac à deux étages selon la revendication 1,
caractérisé en ce qu'au moins une conduite d'amenée (12) avec son ouverture de sortie efficace variable pour le gaz d'extinction est prévue à l'intérieur du faisceau tubulaire (6) de l'échangeur de chaleur (5).
